# EUROPÄISCHE PATENTSCHRIFT

(11) **EP 0 602 503 B1**
(45) Veröffentlichungstag und Bekanntmachung des Hinweises auf die Patenterteilung: **22.10.1997**
(21) Anmeldenummer: 93119669.5
(22) Anmeldetag: 07.12.1993
(51) Int. Cl.: B65G 69/28

(54) **Überladebrücke für Rampen**
Loading bridge ramp
Rampe de chargement

(30) Priorität: 16.12.1992 DE 4242415
(43) Veröffentlichungstag der Anmeldung: 22.06.1994
(73) Patentinhaber: ALTEN GERÄTEBAU GMBH, D-30974 Wennigsen (DE)
(72) Erfinder: Böttcher, Albert, D-30974 Wennigsen (DE)
(74) Vertreter: Depmeyer, Lothar

(56) Entgegenhaltungen:
- FR-A- 2 672 578

## Beschreibung

Die Erfindung betrifft eine Überladebrücke für Rampen mit einer an ihrem rampenseitigen Ende um eine waagerechte Achse verschwenkbaren Brückenplatte und einer am freien Ende der Brückenplatte befindlichen, ein- und ausfahrbaren bzw. ein- und ausklappbaren Verlängerung zur Abstützung der Brückenplatte auf der zu be- bzw. entladenden Plattform, wobei der Brücke Schaltorgane zugeordnet sind, mit denen die Brücke von ihrer Ruhestellung aus in die Betriebsstellung bewegbar ist, wobei die Brücke nach Beendigung des Ladevorganges selbsttätig in die Ruhestellung zurückkehrt, und wobei ferner ein mit der Überladebrücke funktionsmäßig zusammenhängender, dem anzudockenden Fahrzeug zuzuordnender Radkeil mit einer elektrischen Schaltvorrichtung vorgesehen ist, mit der die Brückensteuerung beeinflußbar ist.

Bei bekannten Überladebrücke dieser Art (DE-C-37 26 097) wird die Brückenanlage elektrisch eingeschaltet, wenn sich der Radkeil in seiner Wirkstellung befindet.

Es ist somit ein sog. Hauptschalter vorgesehen, der die elektrische Anlage der Brücke abschaltet, wenn das Fahrzeug abgezogen wird; zugleich ist der Radkeil mit einem elektrischen Schalter versehen, der die elektrische Steuerung für die selbsttätige Rückkehr der Brücke in die Ruhelage nach Abziehen des Fahrzeuges von der Rampe einschaltet, und zwar mit zeitlicher Verzögerung.

Demgemäß sind für den Radkeil zwei elektrische Schalter erforderlich; außerdem erhöht sich der Schaltungsaufwand deshalb erheblich, weil die Rückführung der Brücke in die Ruhelage geschehen muß, wenn der Hauptschalter bereits abgeschaltet hat. Aus diesen Gründen ist die Steuerung auch störanfällig, und es muß davon ausgegangen werden, daß bei einem Fehler an der Steuerung zur selbsttätigen Rückkehr der Brücke in die Ruhelage die Brückenplatte schlagartig in der jeweils vorhandenen Stellung verharrt.

Der Erfindung liegt die Aufgabe zugrunde, hier Abhilfe zu schaffen, den Brückenbetrieb sicherer zu machen und den Schaltungsaufwand zu reduzieren.

Diese Aufgabe wird erfindungsgemäß dadurch gelöst, daß die Schaltvorrichtung des Radkeils den zum Bewegen der Brücke von der Ruhestellung in die Betriebsstellung dienenden Schaltkreis so beeinflußt, daß ein Bewegen der Brücke in die Betriebsstellung nur bei einem in der Wirkstellung befindlichen Radkeil möglich ist, wobei die Schaltvorrichtung des Radkeils einerseits und die Hauptstromzufuhr (Hauptschalter) für die Brücke sowie eine Steuerung für eine Schwimmstellung der Brückenplatte andererseits von einer Wirkverbindung frei sind.

Bei einer so ausgebildeten Überladebrücke kann der Ladebetrieb praktisch nur dann aufgenommen werden, wenn das Fahrzeug ordnungsgemäss angedockt hat. Der am Radkeil angeordnete Schalter hat die Steuerung für das sog. Anheben der Brückenplatte und das sog. Ausfahren der Verlängerung freigegeben. Nachdem die Brücke damit ihre Wirkstellung eingenommen hat und der Ladevorgang durchgeführt wird, kann die Brückenplatte ohne weiteres die sog. Schwimmstellung vollziehen und nach Abziehen des Fahrzeuges in die unterste Stellung absinken, um über diese Stellung automatisch in die Ruhestellung zurückkehren zu können. Ein erneutes Anheben der Brückenplatte und ein Ausfahren der Verlängerung sind allerdings nur dann durchführbar, wenn durch den folgenden Lastkraftwagen der Schalter am Radkeil erneut geschaltet wurde, das Fahrzeug also gesichert vor der Rampe angedockt hat.

Weitere Einzelheiten der Erfindung werden anhand der Zeichnung erläutert, in der ein Ausführungsbeispiel dargestellt ist.

Es zeigen :
- Fig. 1: eine Überladebrücke für Rampen im Längsschnitt, und zwar in der Betriebsstellung und
- Fig. 2: einen Radkeil im senkrechten Schnitt für ein Zusammenwirken mit der Überladebrücke gemäss Fig. 1.

Eine Brückenplatte 1 ist an ihrem rampenseitigen Ende um eine Querachse 2 an der Rampe 3 verschwenkbar gelagert. Die Ausnehmung der Rampe zur Aufnahme der Brücke ist mit 4 bezeichnet, Die Wirkebene der Rampe 3 hat das Bezugszeichen 5 und die Rampenkante das Zeichen 6.

Am vorderen Ende der Brückenplatte 1 befindet sich eine längs zur Brückenplatte 1 verschiebbare, mittels Schlitten 7 bewegbare Verlängerung 8; sie wird durch einen Zylinder 9 bewegt und dient der Abstützung der Brückenplatte 1 auf der zu be- bzw. entladenden Plattform 10, wobei dann auch durch unterschiedliche Einfederung der Plattform 10 eine Folgebewegung der Brückenplatte 1 nötig wird. Dazu ist die Brücke geringfügig kopflastig ausgebildet. Um die Brückenplatte 1 anheben zu können, ist ein Hubzylinder 11 mit einem hyhraulischen Aggregat 12 vorgesehen, von dem aus Leitungen 13 zum Zylinder 9 und Leitungen 14 zum Hubzylinder 11 führen. Das Aggregat kann durch eine Steuerung 15 beeinflusst werden.

Das der Plattform 10 zugeordnete Fahrzeug kann durch einen seine Räder 16 blockierenden Radkeil 17 gesichert werden. Dieser hat eine Kontaktplatte 18 zur Betätigung durch ein Rad 16 und ferner einen durch die Kontaktplatte 18 einschaltbaren Schalter 19.

Von der Steuerung 15 mit der elektrischen Hauptzuleitung 15' die durch einen Hauptschalter 20 stets geschaltet werden kann, führt ferner eine Verbindung im Sinne der Pfeile 21 zum Aggregat 12; ausserdem besteht eine Verbindung zwischen der Steuerung 15 und dem Schalter 19 im Sinne der Pfeile 22. Eine weitere Wirkverbindung im Sinne der Pfeile ist zwischen einem auf der Rampe 3 befindlichen Schaltkasten 23 und dem Schalter 19 gegeben, und zwar im Sinne der Pfeile 24. Eine weitere Verbindung im Sinne des Pfeiles 25 besteht zwischen der Steuerung 15 und dem Schaltkasten 23.

Es sei erwähnt, dass die Überladebrücke nach der Erfindung mit einer sog. automatischen Rückführung in die Ruhestellung ausgestattet ist. Diese sieht nach bekannten Vorbildern vor, dass nach Beendigung des Ladebetriebes und Abziehen des Fahrzeuges die Brückenplatte 1 absinkt, um dann in die Wirkebene 5 der Rampe 3 geführt zu werden, wobei dann auch die Verlängerung 8 eingezogen und in die Ruhestellung innerhalb der Brückenplatte 1 geführt wird. Die Brücke hat ferner eine sog. Schwimmschaltung , die es ermöglicht, dass die Brückenplatte 1 während des Ladebetriebes der Plattform 10 folgen kann.

Der Schaltkasten 23 weist zumindest zwei Bedienungsknöpfe 26 auf, von denen der eine dazu dient, die in der Ruhestellung befindliche Brückenplatte 1 nach oben zu schwenken und der andere zum Ausfahren bzw. Ausklappen der Verlängerung 8 dient.

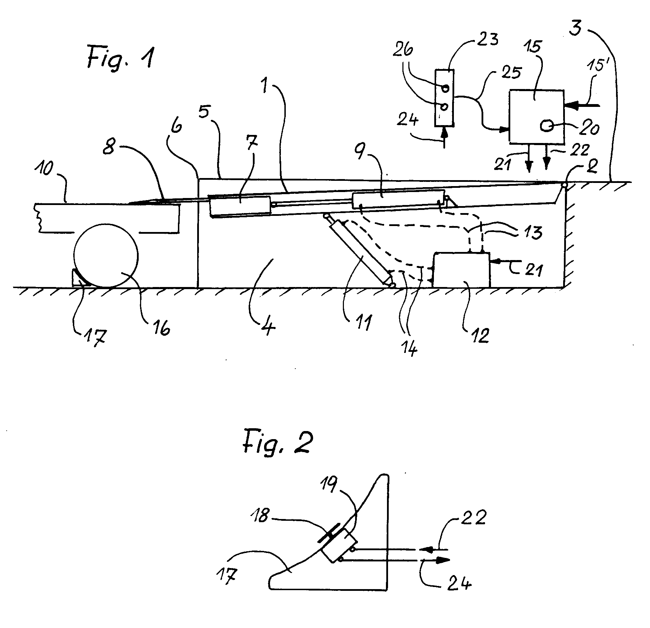

Die Wirkverbindung zwischen dem Schaltkasten 23 und dem Radkeil 17 ist nun so vorgesehen, dass eine wirksame Betätigung der Bedienungsknöpfe 26 nur dann möglich ist, wenn der Radkeil 17 die Stellung gemäss Fig. 1 eingenommen hat bzw. der Lastkraftwagen gegen Abrollen gesichert und der Schalter 19 betätigt ist.

Verlässt der Lastkraftwagen die Rampe 3, so wird zwar der Schalter 19 in die Aus-Stellung gebracht, da aber die anderen Funktionen der Brücke erhalten bleiben, sinkt die Brückenplatte 1 zunächst ab, um so die automatische Rückkehr in die Ruhelage einzuleiten, die ebenfalls vorsieht, dass die Verlängerung 8 in der Ruhelage eingezogen bzw. eingeklappt ist.

Erst wenn ein weiterer Lastkraftwagen ordnungsgemäss an die Rampe 3 geführt und der Radkeil 17 angesetzt ist, kann die Brücke durch Betätigen der Bedienungsknöpfe wieder in die Gebrauchslage geführt werden.

## Patentansprüche

1. Überladebrücke für Rampen mit einer an ihrem rampenseitigen Ende um eine waagerechte Achse (2) verschwenkbaren Brückenplatte (1) und einer am freien Ende der Brückenplatte (1) befindlichen, ein- und ausfahrbaren bzw. ein- und ausklappbaren Verlängerung (8) zur Abstützung der Brückenplatte (1) auf der zu be- bzw. entladenden Plattform (10), wobei der Brücke Schaltorgane zugeordnet sind, mit denen die Brücke von ihrer Ruhestellung aus in die Betriebsstellung bewegbar ist, wobei die Brücke nach Beendigung des Ladevorganges selbsttätig in die Ruhestellung zurückkehrt, und wobei ferner ein mit der Überladebrücke funktionsmäßig zusammenhängender, dem anzudockenden Fahrzeug zuzuordnender Radkeil (17) mit einer elektrischen Schaltvorrichtung (19) vorgesehen ist, mit der die Brückensteuerung beeinflußbar ist, dadurch gekennzeichnet, daß die Schaltvorrichtung (19) des Radkeils (17) den zum Bewegen der Brücke von der Ruhestellung in die Betriebsstellung dienenden Schaltkreis so beeinflußt, daß ein Bewegen der Brücke in die Betriebsstellung nur bei einem in der Wirkstellung befindlichen Radkeil (17) möglich ist, wobei die Schaltvorrichtung (19) des Radkeils (17) einerseits und die Hauptstromzufuhr (Hauptschalter 20) für die Brücke sowie eine Steuerung für eine Schwimmstellung der Brückenplatte (1) andererseits von einer Wirkverbindung frei sind.

2. Brücke nach Anspruch 1, dadurch gekennzeichnet, daß ein Hochschwenken der Brückenplatte (1) und ein Ausfahren bzw. Ausklappen der Verlängerung (8) sowie ggfs. ein Absenken der Brückenplatte (1) in Abhängigkeit vom Betriebszustand der Schaltvorrichtung (19) des Radkeils (17) erfolgt.

3. Brücke nach Anspruch 1, dadurch gekennzeichnet, daß alle zur Brückenbedienung vorgesehenen Schaltelemente auf der Rampe (3) angeordnet sind, während ein Schaltorgan (Schalter 19) zur Überwachung der Bewegung der Brücke von ihrer Ruhelage aus in die Betriebsstellung am Radkeil (17) gelagert ist.

## Claims

1. Transfer bridge for platforms, having a bridge plate (1), which is pivotable at its platform end about a horizontal axis (2), and an extension member (8), which is situated at the free end of the bridge plate (1) and is retractable and extendable, or respectively inwardly and outwardly pivotable, for supporting the bridge plate (1) on the deck (10) to be loaded or unloaded, the bridge having switching means associated therewith, whereby the bridge is displaceable from its inoperative position into the operative position, the bridge returning automatically into the inoperative position once the loading operation has been completed, and a wheel chock (17), which is operationally linked with the transfer bridge and is to be associated with the vehicle to be positioned thereat, being provided with an electrical switching device (19), by means of which device the control of the bridge can be influenced, characterised in that the switching device (19) of the wheel chock (17) so influences the switching circuit, which serves to move the bridge from the inoperative position into the operative positive that a displacement of the bridge into the operative position is only possible when a wheel chock (17) is in the active position, the switching device (19) of the wheel chock (17), on the one hand, and the main supply of current (main switch 20) for the bridge as well as a control for a suspended position of the bridge plate (1), on the other hand, being free of an active connection.

2. Bridge according to claim 1, characterised in that an upward pivotal movement of the bridge plate (1) and an extension, or respectively an outward pivotal movement, of the extension member (8), and possibly also a lowering of the bridge plate (1), are effected in dependence on the operational state of the switching device (19) of the wheel chock (17).

3. Bridge according to claim 1, characterised in that all of the switching elements provided for the operation of the bridge are disposed on the platform (3), while a switching means (switch 19) is mounted on the wheel chock (17) to monitor the movement of the bridge from its inoperative position into the operative position.

## Revendications

1. Niveleur de quai comportant un tablier (2) qui, à son extrémité située du côté du quai, est monté basculant par rapport à un axe (2) horizontal et comportant à l'extrémité libre du tablier (1) un prolongement (8) pouvant être sorti et rentré ou rabattu et déployé, destiné à soutenir le tablier (1) sur la plate-forme (10) à charger ou à décharger; il est associé au niveleur des organes de commande, par lesquels le niveleur peut être déplacé de sa position de repos à sa position de fonctionnement, le niveleur revenant automatiquement à la position de repos une fois l'opération de chargement achevée, et, de plus, une cale (17) de roue rattachée au niveleur de quai du point de vue fonctionnel, associée au véhicule automobile venant à quai, étant munie d'un dispositif (19) électrique de commande par lequel la commande du niveleur peut être influencée, caractérisé en ce que le dispositif (19) de commande de la cale (17) de roue influence le circuit servant au déplacement du niveleur de la position de repos à la position de fonctionnement de telle manière qu'un déplacement du niveleur à la position de fonctionnement n'est possible que lorsque la cale (17) de roue se trouve en la position active, le dispositif (19) de commande de la roue (17) d'une part et l'amenée de courant principale (interrupteur 20 principal) destinée au niveleur ainsi qu'une commande pour une position flottante du tablier (1) d'autre part étant exempts de toute liaison active.

2. Niveleur suivant la revendication 1, caractérisé en ce qu'un basculement vers le haut du tablier (1) et une sortie ou un déploiement du prolongement (8), ainsi que, éventuellement, un abaissement du tablier (1), s'effectuent en fonction de l'état de fonctionnement du dispositif (19) de commande.

3. Niveleur suivant la revendication 1, caractérisé en ce que tous les éléments de commande prévus pour la commande du niveleur sont montés sur le quai (3), tandis qu'un organe de commande (interrupteur 19) servant à surveiller le déplacement du niveleur de sa position de repos à sa position de fonctionnement est monté sur la cale (17) de roue.
